# FASCICULE DE BREVET EUROPEEN

(11) **EP 2 156 228 B1**
(45) Date de publication et mention de la délivrance du brevet: **09.08.2017**
(21) Numéro de dépôt: 08805949.8
(22) Date de dépôt: 06.06.2008
(51) Int. Cl.: G02B 6/44, G02B 6/46

(54) **BOITIER DE RACCORDEMENT POUR FIBRES OPTIQUES**
ANSCHLUSSDOSE FÜR OPTISCHE FASERN
JUNCTION BOX FOR OPTICAL FIBRES

(30) Priorité: 07.06.2007 FR 0755564
(43) Date de publication de la demande: 24.02.2010
(73) Titulaire: Free, Paris 75008 (FR)
(72) Inventeur: FORTIER, Eric, F-77720 Aubepierre Ozouer le Repos (FR)
(74) Mandataire: Dupuis-Latour, Dominique
(86) Numéro de dépôt international: PCT/FR2008/051013
(87) Numéro de publication internationale: WO 2009/001011

(56) Documents cités:
- EP-A- 0 178 179
- EP-A- 1 333 303
- DE-C1- 19 740 246
- DE-U1-202005 011 515
- FR-A- 2 586 827
- JP-A- 9 105 820
- US-A- 5 668 911
- US-A- 5 947 765
- US-B1- 6 511 009
- US-B1- 7 220 144

## Description

L'invention concerne le raccordement des fibres optiques.

Elle s'applique en particulier, mais non exclusivement, au raccordement de fibres optiques dans des parties communes d'un ensemble d'habitations, par exemple un immeuble, notamment pour la fourniture de services de télécommunication haut-débit.

Le raccordement de fibres optiques est généralement localisé dans un boîtier. Un tel boîtier comprend plusieurs cassettes de raccordement distinctes sur lesquelles les fibres sont lovées et raccordées, par exemple par épissure.

On connaît déjà dans l'état de la technique un boîtier dans lequel les cassettes de raccordement sont superposées les unes aux autres et montées mobiles par rapport à un fond du boîtier. La cassette la plus proche du fond délimite, avec ce fond, une chambre. Cette chambre comprend des moyens de réception de spires de fibres optiques permettant de rassembler toutes les fibres dans un même faisceau. Ces moyens comprennent, par exemple, des colliers de serrage des fibres.

Une telle configuration est notamment exposée dans le US 5 947 765 A, correspondant au préambule de la revendication 1

Lors des opérations d'installation et de maintenance du boîtier, l'installateur déplace les cassettes les unes par rapport aux autres, ce qui a pour effet de solliciter chacune des fibres raccordées sur les cassettes déplacées. En particulier, lorsque l'installateur souhaite accéder à une cassette donnée recouverte par d'autres cassettes, il doit déplacer ces autres cassettes, sollicitant ainsi les fibres du faisceau raccordées sur des cassettes non déplacées. Cette sollicitation peut endommager une des fibres voire entraîner sa rupture, notamment au niveau d'une épissure, et causer une interruption du service particulièrement indésirable.

L'invention a pour but de fournir un boîtier permettant de réduire la sollicitation des fibres lorsque des opérations sont effectuées dans le boîtier.

A cet effet, l'invention a pour objet un boîtier de raccordement pour fibres optiques incluant les éléments énoncés dans la partie caractérisante de la revendication 1.

Les emplacements du boîtier selon l'invention permettent de solliciter les fibres reçues dans un même emplacement indépendamment des fibres reçues dans les autres emplacements. De plus, si le boîtier comprend des cassettes de raccordement, le boîtier selon l'invention permet de fournir aux fibres un support d'appui commun situé hors de celles-ci.

De tels organes permettent aux spires de s'étendre avec des rayons de courbure variables par rapport à l'axe principal. Ainsi, chaque emplacement peut recevoir plusieurs spires de plusieurs fibres, les spires d'une même fibre pouvant avoir des rayons de courbure adaptés à la sollicitation envisageable pour la fibre correspondante.

De façon optionnelle, au moins deux des organes de délimitation présentent des dimensions radiales maximales différentes entre eux. Selon d'autres caractéristiques optionnelles du boîtier selon l'invention :
- les organes de délimitation sont répartis de façon uniforme autour de l'axe. Par répartition uniforme, on fait référence à une répartition dans laquelle le décalage angulaire entre les organes successifs est constant. La répartition uniforme des organes de délimitation permet d'assurer un maintien axial régulier, autour de l'axe, des spires de fibre optique dans chaque emplacement. Les organes ainsi répartis évitent que les spires ne débordent localement dans un autre emplacement.
- les organes de délimitation forment deux séries d'organes associées aux emplacements respectifs, les organes de l'une des séries étant décalés angulairement autour de l'axe par rapport à ceux de l'autre série. Des tels organes permettent de maintenir axialement, de façon efficace, les spires de fibre optique dans au moins un des emplacements délimités par les organes des deux séries. Avantageusement, les organes de l'une des séries s'étendent entre ceux de l'autre série en vue axiale du support.

Avantageusement, le boîtier comprend des organes d'appui radial s'étendant axialement par référence à un axe principal du support, par exemple à des distances de l'axe différentes l'une de l'autre pour au moins deux des organes d'appui, les organes d'appui étant de préférence portés par les organes de délimitation.

Ces organes d'appui permettent de maintenir radialement les spires dans chaque emplacement en limitant leur rayon de courbure, que ce soit par une limite inférieure ou supérieure.

Un tel support permet, lorsque la fibre optique est sollicitée, d'assurer que cette dernière ne prend pas un rayon de courbure inférieur à un rayon de courbure prédéterminé en dessous duquel la qualité de la transmission future du signal dans la fibre est fortement dégradée.

De plus, dans le cas où l'installateur sollicite une fibre formant les spires dans un emplacement donné, ces spires peuvent se resserrer et/ou se desserrer autour du support.

Dans le cas d'une sollicitation où les fibres se resserrent, celles-ci peuvent présenter, le cas échéant, le rayon de courbure minimal, et permettent de fournir une sur-longueur de fibre.

L'invention est notamment applicable à un ensemble de deux boîtiers de raccordement et d'une fibre optique, dans lequel au moins un des boîtiers est tel que défini ci-dessus et dans lequel la fibre optique forme une spire dans un des emplacements de la chambre et passe de ce boîtier à l'autre boîtier.

Dans un tel ensemble, la fibre optique passant d'un boîtier à l'autre est sollicitée dès que les boîtiers sont déplacés l'un par rapport à l'autre. Le boîtier dans lequel la fibre optique forme la spire permet de recevoir d'une part, dans un emplacement, les fibres destinées à êtres raccordées dans le boîtier comprenant le support et, d'autre part, dans un autre emplacement distinct, la fibre passant dans l'autre boîtier, et éventuellement destinée à être raccordée dans cet autre boîtier. Ainsi, le déplacement des deux boîtiers l'un par rapport à l'autre ne sollicite que la fibre passant entre ces deux boîtiers.

L'invention sera mieux comprise à la lecture de la description qui va suivre, donnée uniquement à titre d'exemple non limitatif et faite en se référant aux dessins dans lesquels :
- la figure 1 est une représentation schématique d'un ensemble d'habitations comprenant plusieurs boîtiers et un ensemble selon l'invention ;
- la figure 2 est une vue en perspective d'un ensemble de premier et deuxième boîtiers selon un premier mode de réalisation de l'invention montrant des orifices d'entrée et/ou de sorties d'un câble ;
- la figure 3 est une vue en perspective de l'ensemble de la figure 2 montrant des moyens d'articulation ;
- la figure 4 est une vue en coupe selon le plan IV-IV de l'ensemble de la figure 2 dans lequel le deuxième boîtier est dépourvu de couvercle ;
- la figure 5 est un agrandissement de la zone V de la figure 4 ;
- la figure 6 est une vue d'un boîtier selon le premier mode de réalisation de l'invention démuni de son couvercle montrant une partie d'un support d'appui pour des spires de fibre optique;
- la figure 7 est une vue agrandie de la zone VII de la figure 6 ;
- la figure 8 est une vue en perspective du boîtier de la figure 6 comprenant deux cassettes en position ouverte ;
- la figure 9 est une vue en perspective de l'ensemble de la figure 4 en position ouverte ;
- la figure 10 est une autre vue en perspective de l'ensemble de la figure 6 montrant un support d'appui pour des spires de fibre optique ;
- la figure 11 est une vue en perspective d'une partie amovible du support d'appui de la figure 10 ;
- la figure 12 est une vue en perspective d'un organe d'immobilisation de l'ensemble de la figure 10 ;
- la figure 13 est une vue en perspective d'une des cassettes de la figure 8 ;
- la figure 14 est une vue agrandie de la zone XIV de la figure 13 ;
- la figure 15 est une vue de dessus de la cassette de la figure 13 ;
- la figure 16 est une vue en perspective d'un support d'épissure ;
- les figures 17 et 18 sont des vues latérale et de dessus du support de la figure 16;
- la figure 19 est une vue agrandie d'un détail de la figure 17 dans laquelle on a représenté des fibres optiques ;
- les figures 20 à 23 sont des vues analogues aux figures 16 à 19 illustrant une variante du support d'épissure;
- la figure 24 est une autre vue en perspective du boîtier de la figure 8 montrant les orifices d'entrée et/ou de sorties du câble ;
- la figure 25 est une vue de face d'une partie des moyens de fixation du câble du boîtier de la figure 24;
- la figure 26 est une vue en perspective d'un organe d'étanchéité du boîtier de la figure 24 ;
- la figure 27 est une vue en perspective d'une variante de l'organe d'étanchéité représenté sur la figure 24.
- la figure 28 est une vue en perspective d'un boîtier selon un deuxième mode de réalisation de l'invention ;
- la figure 29 est une vue agrandie de la zone XXIX de la figure 2 ;
- la figure 30 est une vue d'un coulisseau d'obturation d'un orifice d'entrée et/ou de sortie d'un câble du boîtier de la figure 28 ;
- la figure 31 est une vue en coupe du boîtier inférieur de la figure 10;
- la figure 32 est une vue analogue à la figure 31 illustrant une variante du support d'appui.

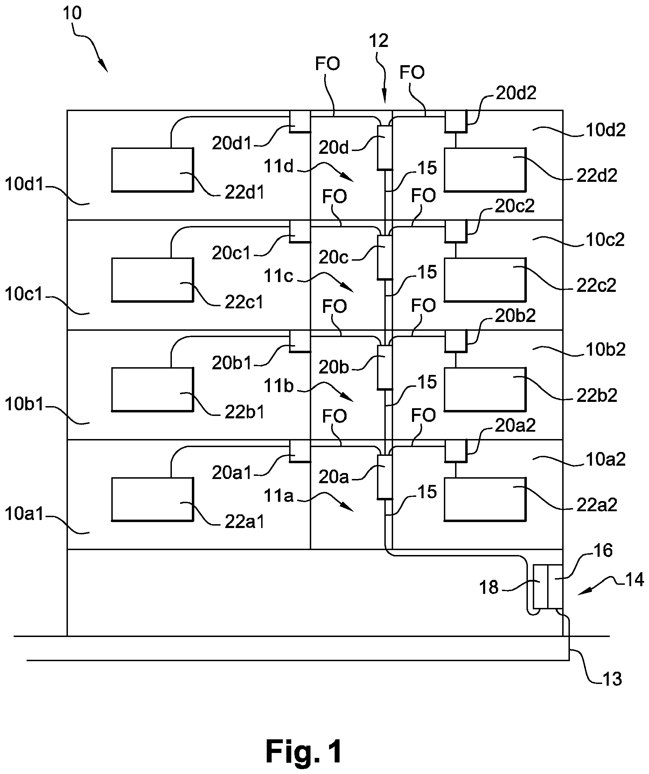

On a représenté sur la figure 1 un ensemble d'habitations et désigné par la référence 10. L'ensemble d'habitations, en l'espèce un immeuble, comprend huit habitations séparées 10a1, 10a2, 10b1, 10b2, 10c1, 10c2, 10d1, 10d2 réparties sur quatre paliers 11a, 11b, 11c et 11d ainsi qu'un réseau 12 de fibres optiques reliant chaque habitation 10a, 10b, 10c et 10d à un câble 13, dit d'adduction. Le câble d'adduction 13 comprend une pluralité de fibres optiques.

Le réseau 12 comprend un ensemble 14 de deux boîtiers identiques 16, 18, et un câble 13 selon l'invention, le câble 13 pénétrant dans le boîtier 16. Chaque boîtier 16, 18 est conforme à un premier mode de réalisation de l'invention, dans lequel pénètre le câble 13. Chaque boîtier 16, 18 est appelé boîtier de pied d'immeuble. L'ensemble 14 permet de raccorder le câble d'adduction 13 à un câble d'immeuble 15 comprenant également une pluralité de fibres optiques. Le câble d'immeuble 15 relie les boîtiers 16, 18 à des boîtiers 20a-d disposés respectivement sur chaque palier 11a-d. Chaque boîtier 20a-d, appelé boîtier de palier, est conforme à un deuxième mode de réalisation de l'invention. Chaque boîtier 20a-d est respectivement relié, en l'espèce, à deux boîtiers d'habitation 20a1, 20a2, 20b1, 20b2, 20c1, 20c2, 20d1, 20d2 des habitations 10a1, 10a2, 10b1, 10b2, 10c1, 10c2, 10d1, 10d2 du palier correspondant par une fibre optique FO. En variante, chaque boîtier 20a-d pourra être relié à un ou plus de deux boîtiers d'habitation. Enfin, chaque boîtier d'habitation est respectivement relié à des moyens tels que des terminaux 22a1, 22a2, 22b1, 22b2, 22c1, 22c2, 22d1, 22d2. Ces terminaux peuvent comprendre par exemple des moyens de réception, de décodage et de traitement de signal haut débit ou très haut débit pour des applications de type internet, téléphonie, télévision etc. au sein de chaque habitation 10a1, 10a2, 10b1, 10b2, 10c1, 10c2, 10d1, 10d2.

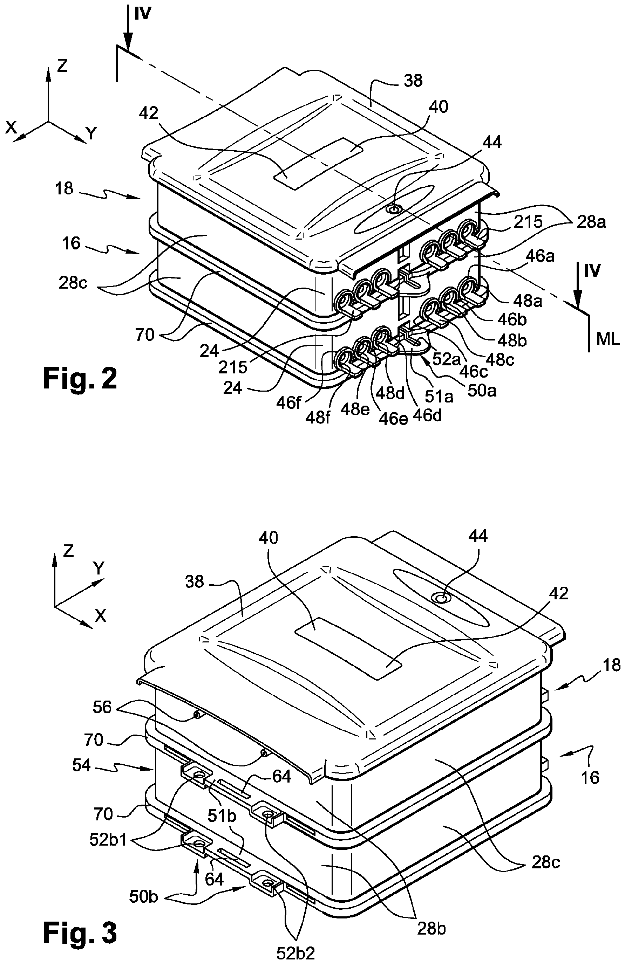

On a représenté sur les figures 2 à 4, 9 et 10 l'ensemble de boîtiers 14. Sur ces figures, on a représenté des axes X, Y, Z orthogonaux entre eux correspondant aux orientations longitudinale Y, transversale X et verticale Z du boîtier tel qu'illustré.

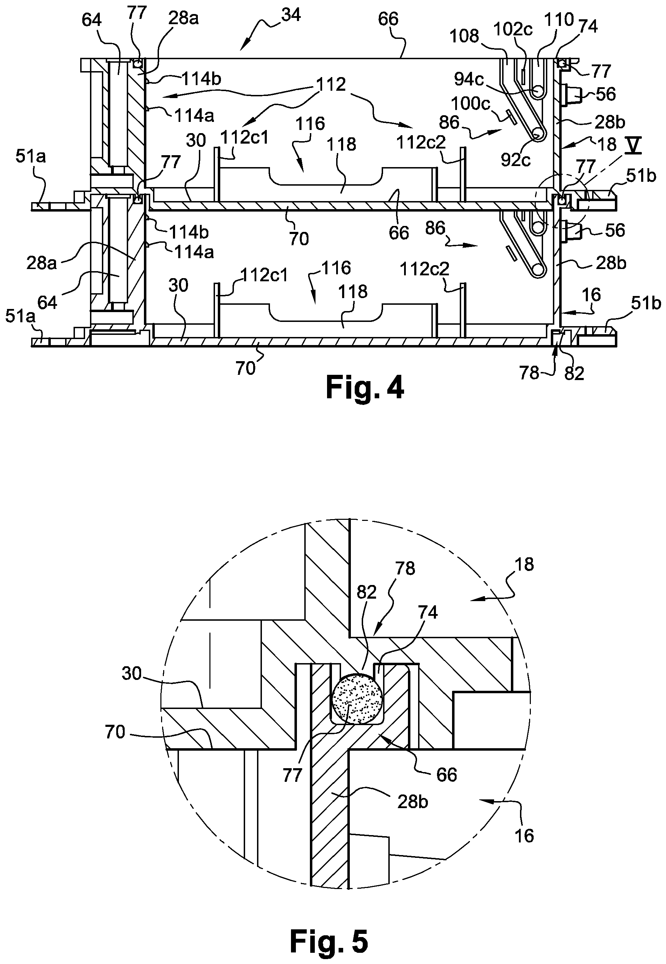

Chaque boîtier 16, 18 comprend un corps 24 délimité par quatre parois périphériques 28a-d. Les deux parois 28a, 28b sont parallèles au plan X,Z alors que les deux parois 28c, 28d sont parallèles au plan Y,Z. En référence aux figures 2 et 3, les parois 28a et 28b sont respectivement appelées parois avant 28a et arrière 28b. Toutefois, cette appellation, valable dans l'exemple représenté sur ces figures, n'est plus pertinente dans le cas où, par exemple, l'ensemble est dans une position verticale dans laquelle la paroi 28a serait en dessous de la paroi 28b. Chaque corps 24 est également délimité par un fond 30 parallèle au plan X,Y comme représenté sur les figures 4, 6 et 8. Les quatre parois 28a, 28b, 28c, 28d et le fond 30 de chaque boîtier lui donnent une forme générale parallélépipédique rectangle.

Les parois 28a-d délimitent, pour chaque boîtier 16, 18, une ouverture 34, visible sur les figures 4, 6 et 8. Sur les figures 2 et 3, l'ensemble 14 est représenté en position fermée dans laquelle l'ouverture 34 du premier boîtier 16 est obturée par le fond 30 du deuxième boîtier 18. L'ouverture 34 du deuxième boîtier 18 est, quant à elle, obturée par un couvercle 38. On désignera parfois dans la suite pour plus de simplicité le premier boîtier 16 comme boîtier inférieur et le deuxième boîtier 18 comme boîtier supérieur, et ce par référence aux figures. Il est entendu que les deux boîtiers peuvent être superposés avec leurs fonds verticaux et qu'on peut même envisager que le premier boîtier 16 soit en contact avec une face horizontale d'un support, par exemple le plafond d'un local, et se trouve ainsi au-dessus du deuxième boîtier 18.

Le couvercle 38 comprend une vitre transparente d'identification 40 du boîtier 18 recouvrant un espace d'identification 42 destiné à recevoir, par exemple, une étiquette. Un trou 44 pour une vis est ménagé dans le couvercle 38.

Comme représenté sur la figure 2, chaque paroi avant 28a comprend six orifices 46a-f d'entrée et/ou de sortie pour le passage d'un ou plusieurs câbles 13 à fibres optiques. Ces orifices sont agencés en deux groupes de trois orifices, ces groupes étant disposés de part et d'autre d'un plan longitudinal médian ML du boîtier, parallèle au plan Y,Z. Chaque orifice présente une forme générale circulaire et est muni d'un organe d'étanchéité 48a-f apte à coopérer avec la paroi 28a et le câble 13.

En référence à la figure 3, chaque fond 30 comporte également des moyens de fixation 50a, 50b, s'étendant parallèlement au fond 30, respectivement à partir des parois avant 28a et arrière 28b, en sens opposés les uns des autres, vers l'extérieur du boîtier. Ces moyens de fixation 50a, 50b sont destinés à la fixation du boîtier sur un support, par exemple une paroi. Les moyens de fixation avant 50a comprennent une patte 51 a à bord courbe présentant un orifice 52a. Les moyens de fixations arrière 50b comprennent une patte 51 b de forme générale rectangulaire présentant deux orifices circulaires 52b1, 52b2 symétriques l'un de l'autre par rapport au plan ML. Chaque orifice 52a, 52b1, 52b2 permet, entre autres, le passage d'une vis pour la fixation du boîtier 16 sur le support.

Comme représenté sur la figure 3, chaque paroi arrière 28b comprend des moyens d'articulation 54 des boîtiers 16 et 18 l'un par rapport à l'autre. Ces moyens 54 comprennent deux plots 56 de forme générale cylindrique disposés symétriquement par rapport au plan ML et faisant saillie par rapport à la paroi 28b suivant la direction Y. Les moyens d'articulation 54 comprennent également la patte arrière 51 b. Les orifices circulaires 52b1, 52b2 permettent le passage des plots 56 correspondant de l'autre boîtier 16, 18.

On a représenté sur la figure 4 l'ensemble 14 sans le couvercle 38. Pour fixer les deux boîtiers 16, 18 sur le support, ceux-ci comprennent également un canal 64 ménagé dans chaque paroi avant 28a. Ce canal 64 présente une forme cylindrique et traverse la paroi 28a de chaque ouverture 34 parallèlement à ses faces principales jusqu'à chaque fond 30. L'ensemble 14 peut ainsi être fixé à un support au moyen d'une vis commune traversant les canaux coaxiaux 64 des deux boîtiers 16, 18.

En référence aux figures 4 et 5, chaque ouverture 34 est délimitée par un bord 66 alors que chaque fond comprend un bord 70. Comme représenté plus en détail sur la figure 5, chaque bord 66 d'ouverture présente une section en forme générale de « U » et comprend une gorge 74 dans laquelle est disposée un organe d'étanchéité 78, par exemple un joint à écrasement. Chaque bord 70 de fond comprend également une gorge 78 présentant également une section en forme générale de « U », inversée par rapport à celle du bord 66, cette section étant plus grande que la section de la gorge d'ouverture 74. Ainsi, la gorge de fond 78 peut recouvrir le bord d'ouverture 66. De plus, chaque gorge de fond 78 comprend une nervure 82 coopérant avec le joint à écrasement 77. Dans l'exemple représenté aux figures 4 et 5, le bord 66 du deuxième boîtier 18 n'étant pas recouvert par le couvercle 38, le joint 77 n'est pas écrasé.

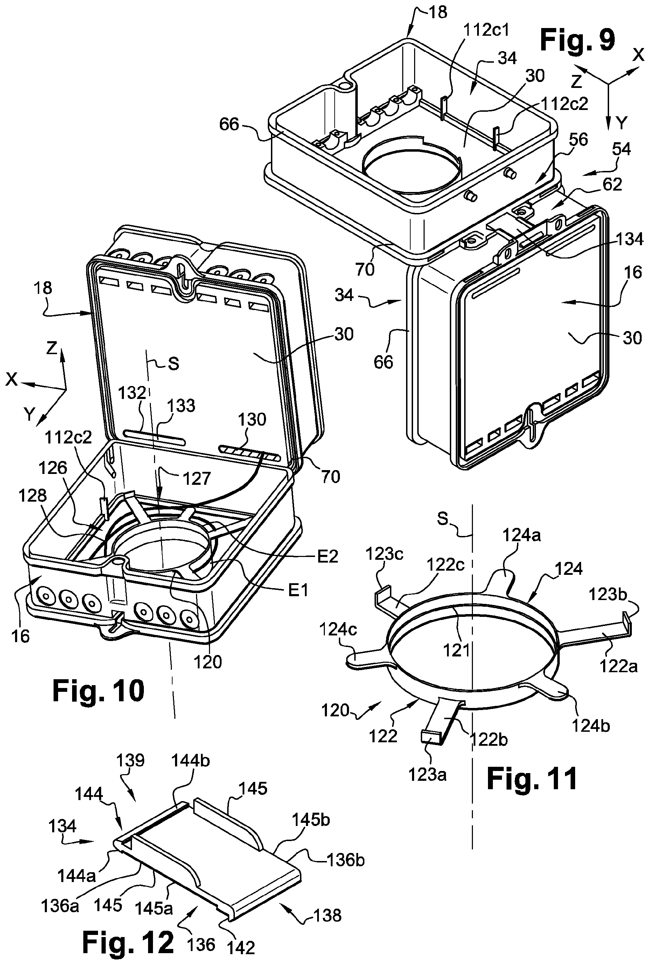

On a représenté sur les figures 9 et 10 l'ensemble 14 dans une position ouverte dans laquelle le boîtier 16 est ouvert. Les moyens d'articulation 54 sont agencés de façon que, dans cette position ouverte, les fonds 30 sont perpendiculaires l'un par rapport à l'autre et le bord 70 du fond 30 du deuxième boîtier 18 est en contact avec le bord 66 de l'ouverture 34 du premier boîtier 16. En l'espèce, la gorge de fond 78 du deuxième boîtier 18 recouvre latéralement le bord 66. Comme représenté sur les figures 3, 4 et 6, l'axe de chaque orifice 52b1, 52b2 est perpendiculaire et sécant avec l'axe de chaque plot 56 correspondant du même boîtier. Cela permet de loger les plots 56 du premier boîtier dans les orifices 52b1, 52b2 du deuxième par articulation des boîtiers 16 et 18 l'un par rapport à l'autre.

L'ensemble comprend des moyens d'immobilisation des boîtiers dans cette position relative où le premier boîtier est ouvert. En l'espèce, ces moyens comprennent entre les orifices 52b1, 52b2 de la patte arrière 51 b une fente 64 ménagée dans la patte 51 b et s'étendant parallèlement à la direction X. Les moyens d'immobilisation comprennent aussi un verrou 134 pouvant être reçu simultanément dans les fentes 64 des boîtiers 16 et 18. Comme représenté sur la figure 12, le verrou 134 comprend un corps 136 de forme générale plate rectangulaire, présentant deux faces principales 136a et 136b et deux bords opposés 138 et 139 chacun muni d'un relief 142 et 144. Le relief 142 fait saillie par rapport à la face 136a. Le relief 144 comprend d'une part, une partie 144a faisant saillie par rapport à la face 136a du même côté du corps que le relief 142 et d'autre part, une partie 144b faisant saillie par rapport à la face 136b du côté opposé à la partie 144a. La face 136b présente deux joues 145 perpendiculaires à la face 136a et disposées sur les bords 145a, 145b perpendiculaires aux bords 138, 139. Chaque joue 145 s'étend sur environ deux tiers de chaque bord 145a, 145b. La distance entre le bord 139 et chaque joue 145 est égale à l'épaisseur de la patte arrière 51 b de façon que ce bord soit maintenu entre le relief 144 et chaque joue 145.

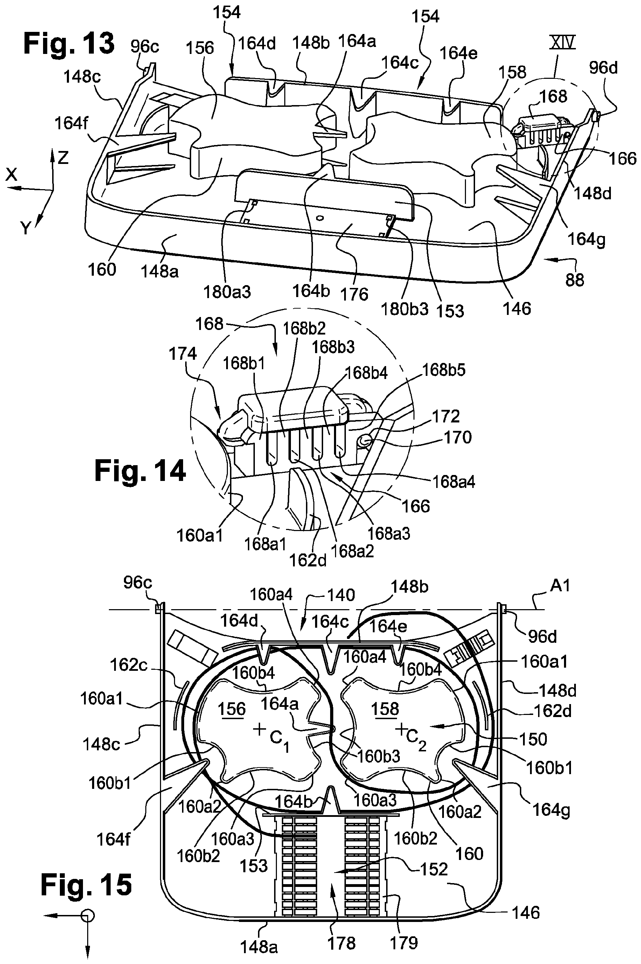

Chaque boîtier 16, 18 comprend également des moyens d'articulation 86 en rotation de deux cassettes 88, 90 pour la réception de fibres optiques. Ces cassettes 88, 90 seront décrites précisément plus bas en référence aux figures 13 à 15. Ces moyens d'articulation 86 comprennent deux paires 92, 94 de trous 92c, 92d et 94c, 94d, de forme générale circulaire, ménagés dans chacune des parois 28c et 28d, symétriquement par rapport au plan ML. Chaque paire 92 et 94 définit deux axes A1 et A2 de rotation des cassettes. Les trous 92c, 92d, 94c, 94d sont disposés dans la moitié du boîtier 16 opposée à celle comprenant les orifices 46a-f d'entrée et/ou de sortie. Chaque paire 92, 94 est apte à recevoir des moyens d'articulations complémentaires de chaque cassette 88, 90, en l'espèce une paire de doigts 96b, 96c comme cela est représenté sur les figures 13 et 15. Chaque trou 92c et 92d est disposé à mi-hauteur de chaque paroi 28c, 28d. Chaque trou 94c, 94d est disposé à mi-hauteur entre chaque trou 92c, 92d et le bord 66. Les paires 92, 94 sont alignées suivant une direction parallèle à la direction Z.

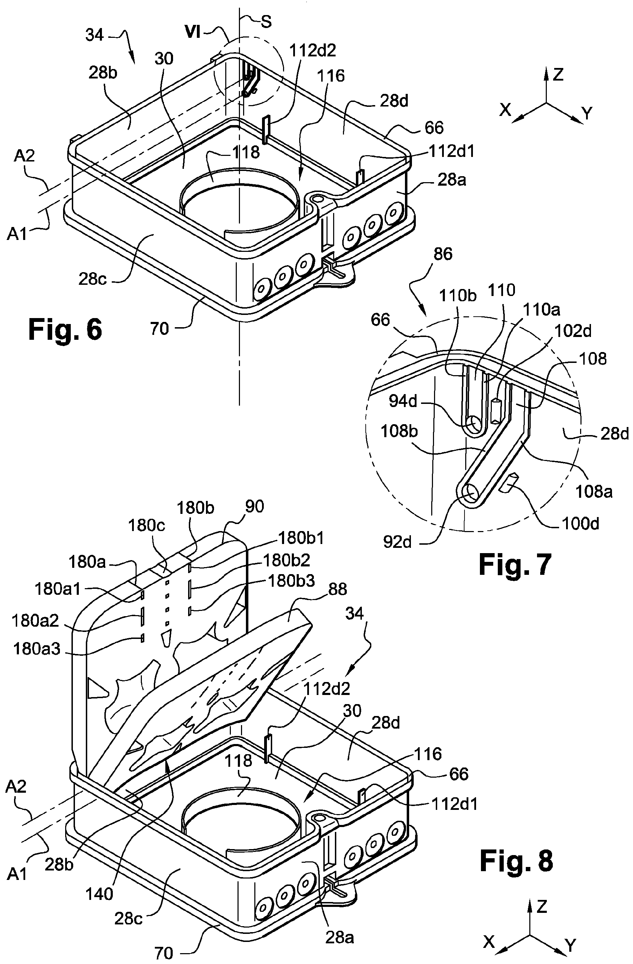

Comme représenté sur la figure 8, chaque cassette 88, 90 est mobile en rotation entre une position de fonctionnement et une position de maintenance par rapport au fond 30. Sur la figure 8, les cassettes 88, 90 sont représentées dans leur position de maintenance.

Dans la position de maintenance, la première cassette 88 forme un angle d'environ 50° avec le fond 30 et la deuxième cassette 90 forme un angle d'environ 90° avec le fond 30. Les première et deuxième cassettes 88, 90 sont respectivement maintenues dans leur position de maintenance par des moyens de maintien 100c, 100d et 102c, 102d, représentés plus en détail sur la figure 7. Ces moyens 100c, 100d et 102c, 102d sont disposés symétriquement par rapport au plan ML et comprennent des plots faisant saillie par rapport aux parois 28c, 28d. Les plots 100c, 100d sont orientés de façon à former un angle d'environ 50° avec le fond 30 alors que les plots 102c, 102d sont orientés de façon à former un angle d'environ 90° avec le fond 30. De plus, les moyens d'articulation 86 comprennent des moyens de guidage permettant de faire glisser les doigts 96, 98 respectivement du bord 66 jusqu'aux paires 92 et 94. Ces moyens de guidage comprennent chacun un canal 108, 110 délimité par deux bords 108a, 108b, 110a, 110b. Le canal 110 est rectiligne alors que le canal 108 présente un angle entre le bord 66 et chaque trou 92c, 92d.

En référence aux figures 4, 6 et 8, dans la position de fonctionnement, la cassette 88 prend appui sur des moyens d'appui 112. Ces moyens d'appui 112 comprennent deux paires de nervures 112c1, 112c2, 112d1, 112d2 de forme générale rectangulaire faisant chacune saillie respectivement par rapport à la face interne de chaque paroi 28c, 28d. Les nervures 112c1, 112d1 sont situées à environ un quart de la longueur du boîtier en partant de la paroi 28a. Les nervures 112c2, 112d2 sont, elles, situées à environ un quart de la longueur du boîtier en partant de la paroi 28b. Ces nervures 112c1, 112c2, 112d1, 112d2 s'étendent du fond 30 du boîtier 16 jusqu'à un tiers environ de la hauteur de chaque paroi 28a, 28d. Les moyens d'appui 112 comprennent également un couple de reliefs 114a-b permettant respectivement aux cassettes 88, 90 d'être maintenues en position fermée, notamment lorsque le boîtier 16 est fixé à une paroi verticale. Chaque relief 114a, 114b fait saillie par rapport à une partie arrondie de la face interne de la paroi 28a comprenant le canal 64. Le relief 114a est situé à environ deux tiers de la hauteur entre le fond 30 et le bord 66. Le relief 114b est situé à affleurement de l'ouverture 34. Dans cette position de maintenance, les cassettes 88, 90 donnent davantage accès qu'en position de fonctionnement à une chambre 116. Dans la position de fonctionnement, la chambre 116 est délimitée par deux parois en regard l'une de l'autre, en l'espèce par la cassette 88, le fond 30 et les parois 28a-d.

Comme illustré sur les figures 4, 6, 8, 31 et 32, cette chambre 116 du boîtier comprend un support 126 pour des spires. Ce support 126 comprend une partie 118 d'une seule pièce avec le fond du boîtier et une partie 120 rapportée de façon amovible. La partie 118 forme une embase de forme générale cylindrique par référence à un axe principal S. Le cylindre est interrompu sur un côté par une ouverture. Cette partie 118 est située sensiblement au centre du fond 30.

Comme représenté également sur la figure 10, la partie 120 forme une entretoise et est enfilée coaxialement sur l'embase 118. En référence à la figure 11, l'entretoise 120 comprend un corps 121 de forme générale cylindrique présentant deux bords inférieur 122 et supérieur 124.

Le bord inférieur 122 est le bord de l'entretoise 120 le plus proche du fond 30. Le bord 122 porte une première série de trois organes de délimitation de deux emplacements distincts : E1, appelé emplacement inférieur et E2, appelé emplacement supérieur, de la chambre 118. Ces emplacements sont séparés l'un de l'autre. Ces organes de délimitation sont formés par des pattes inférieures 122a-c s'étendant radialement en s'éloignant de l'axe principal S . Ces trois pattes 122a-c sont angulairement disposés à 120° l'une par rapport à l'autre. Chaque organe de délimitation 122a-c porte, à son extrémité, un organe d'appui radial s'étendant axialement selon la direction Z. En l'espèce, chaque organe d'appui est formé par un ergot 123a-c dirigé vers l'ouverture 34. Les pattes 122a-c présentent des dimensions radiales maximales différentes. de façon à faciliter l'introduction de l'entretoise dans la chambre 116. Dans l'exemple représenté, les pattes 122a et 122b sont environ deux fois plus longues que la patte 122c de sorte que les ergots 123a et 123b s'étendent à des distances de l'axe S différentes de celle correspondant à l'ergot 123c.

Le bord supérieur 124 porte une deuxième série de trois organes de délimitation des emplacements inférieur E1 et supérieur E2 s'étendant radialement en s'éloignant de l'axe principal S. Ces trois pattes 124a-c sont radialement de même longueur que la patte inférieure 122c. Elles sont angulairement disposés à 120° l'une par rapport à l'autre. Les organes 122a-c de la première série, associés à l'emplacement E1, sont décalés angulairement autour de l'axe par rapport aux organes 124a-c de la deuxième série, associés à l'emplacement E2. En l'espèce, les organes 124a-c sont décalés respectivement de 60° par rapport aux pattes inférieures 122a-c en vue suivant l'axe S. Les organes de délimitation 122a-c et 124a-c sont ainsi répartis de façon uniforme autour de l'axe principal S du support 126. L'entretoise amovible 120 est maintenue sur l'embase 118 par la cassette 88 lorsque celle-ci est dans en position dans le boîtier.

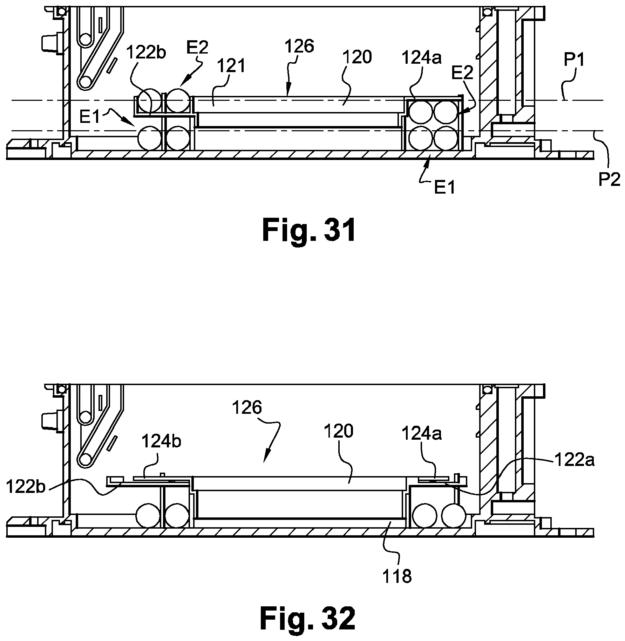

Comme représenté sur les figures 31 et 32, le support d'appui 126 est apte à servir d'appui commun aux spires de chaque emplacement. Comme représenté sur la figure 31, les emplacements E1 et E2 peuvent recevoir des câbles comprenant plusieurs fibres optiques. Dans une variante et comme représenté sur la figure 32, l'emplacement E2 peut recevoir une ou plusieurs fibres optiques nues. Les emplacements E1 et E2 sont ainsi aptes à recevoir des spires de fibre optique de sorte que ces spires s'étendent respectivement dans des plans P1 et P2 différents l'un de l'autre. Les emplacements E1 et E2 se succèdent le long de l'axe principal S. En l'espèce, l'emplacement inférieur E1 est délimité par le fond 30 et les pattes inférieures 122a-c, entre ceux ci, alors que l'emplacement supérieur E2 est délimité par les pattes inférieures 122a-c et les pattes supérieures 124a-c entre celles-ci.

Ce support 126 permet d'une part, l'appui radial des spires 128 grâce au corps cylindrique 121 de l'entretoise, à l'embase 118 et aux ergots 123a-c et, d'autre part, l'appui axial des spires 128 grâce aux pattes 122a-c, 124a-c. Le support 126 définit un rayon de courbure minimal des spires 128. L'embase 118 et le corps 121 définissent respectivement le rayon de courbure minimal de l'emplacement inférieur E1 et de l'emplacement supérieur E2 alors que les parois 28c, 28d et les ergots 123a-c définissent respectivement un rayon de courbure maximal de l'emplacement inférieur E1 et de l'emplacement supérieur E2.

L'emplacement E2 permet généralement l'appui d'une spire formée par une fibre destinée à passer dans le boîtier supérieur et à être raccordée sur une cassette de ce boîtier supérieur 18 alors que l'emplacement E1 permet l'appui d'une spire formée par une fibre destinée à être raccordées sur une cassette du boîtier inférieur 16. En variante, ces fonctions des emplacements E1 et E2 peuvent être interverties.

Pour permettre le passage du câble du boîtier inférieur 16 au boîtier supérieur 18, le fond 30 de ce dernier présente un orifice de passage 130. Cet orifice présente une forme générale oblongue et s'étend dans la moitié du fond 30 la plus proche du bord 70 du deuxième boîtier 18 en contact avec le bord 66 de l'ouverture 34 du boîtier 16 en position ouverte. L'orifice 130 s'étend sur un peu moins de la moitié de la largeur transversale du fond 30. Un autre orifice 132, symétrique de l'orifice 130 par rapport au plan ML, est ménagé dans le fond 30. Dans l'exemple représenté sur la figure 10, l'orifice 132 est obturé par un opercule sécable 133.

On a représenté sur les figures 13 et 15, une cassette 88, identique à la cassette 90. Cette cassette 88 présente une forme générale rectangulaire et comprend un fond 146 à partir duquel des parois 148a-d font saillies perpendiculairement au fond 146. Chaque paroi 148a-d s'étend respectivement en regard de chaque paroi 28a-d. Chaque paroi 148c, 148d présente à son extrémité opposée à la paroi 148a, le doigt 96c, 96d. Les doigts 96c, 96d définissent un axe de rotation de la cassette 88 confondu avec l'axe de rotation A1 défini par les trous 92c, 92d. La paroi 148d est en retrait de cet axe de rotation de sorte que, lorsque la cassette est montée sur le boîtier 16 comme cela représentée sur la figure 8, une ouverture 140 est ménagée entre la cassette et la paroi 28b. L'axe de rotation A1 de la cassette intercepte cette ouverture 140 et l'orifice 130 est situé au droit de cette ouverture 140.

La cassette 88 comprend deux zones 150 et 152 séparées l'une de l'autre par une paroi 153 faisant saillie par rapport au fond 146 et s'étendant selon la direction Z. La paroi 153 est sensiblement parallèle au plan X, Z et est située à environ mi-chemin entre les paroi 148a et 148b. La zone 150 comprend des moyens de guidage 154 d'au moins une fibre, notamment agencés pour donner à la fibre un rayon de courbure supérieur à un rayon de courbure prédéterminé, en deçà duquel la transmission du signal pourrait être dégradée. Ces moyens sont agencés pour permettre de disposer la ou chaque fibre de sorte que son sens d'enroulement change le long de la fibre et/ou de sorte que la fibre se croise au moins une fois, et/ou au moins deux spires de la fibre s'étendent côte à côte. En l'espèce, les moyens de guidage 154 comprennent deux tambours 156 et 158 disposés symétriquement l'un de l'autre par rapport au plan ML. Chaque tambour 156 et 158 comprend des parois 160 faisant saillie par rapport au fond 146 et s'étendant selon la direction Z. Les parois 160 sont disposés autour d'un centre C1, C2 du tambour 156, 158 et consistent en une alternance de quatre parois convexes 160a1-4 et de quatre parois concaves 160b1-4 autour du centre C1, C2. Les parois concaves 160b1, 160b2, 160b4 du tambour 156 sont respectivement en regard des parois 148c, 148a, 148b. Les parois concaves 160b1, 160b2, 160b4 du tambour 158 sont respectivement en regard des parois 148d, 148a, 148c. Les parois 160b3 des tambours 156 et 158 sont en regard l'une de l'autre. Les parois convexes 160a1-4 sont dirigées vers les quatre coins de la cassette 88.

Les moyens de guidage 154 comprennent également deux parois 162c et 162d faisant saillie par rapport au fond 146, disposées symétriquement l'un de l'autre par rapport au plan ML et présentant chacune une forme d'arc. Le centre de courbure de chaque paroi 162c, 162d est situé du côté du centre du boîtier 16. Chaque paroi 162c, 162d est agencée respectivement entre chaque paroi 148c, 148d et chaque tambour 156, 158.

De plus, les moyens de guidage 154 comprennent des moyens de guidage vertical d'une fibre optique. Ces moyens de guidage comprennent des pattes 164 présentant une forme générale de pointe s'étendant sensiblement parallèlement au fond 146 de la cassette 88. Une patte 164a s'étend à partir de la paroi 160b3 du tambour 156 vers le tambour 158 sans toucher celui-ci, la flèche pointant vers le tambour 158. Une patte 164b s'étend à partir de la paroi 153, au milieu de celle-ci suivant la direction X, en direction de la paroi 148b, la flèche pointant vers cette paroi 148b. Une patte 164c s'étend à partir de la paroi 148b, au milieu de celle-ci suivant la direction X, en direction de la paroi 153, la flèche pointant vers cette paroi 153. Deux autres pattes 164d et 164e, situées de part et d'autre de la patte 164c, symétriquement par rapport au plan ML, s'étendent de façon analogue à cette patte 164c et présentent des dimensions homothétiquement réduites. Enfin, des pattes 164f et 164g, disposés symétriquement l'une de l'autre par rapport au plan ML, s'étendent respectivement suivant la direction Y à partir du milieu des parois 148c et 148d, en direction des parois 160b1, la flèche pointant vers ces parois 160b1.

En référence à la figure 14, la zone 150 comprend aussi deux peignes 166 pour le maintien des fibres optiques, muni chacun d'un contre-peigne 168 mobile par rapport au peigne 166 pour obturer celui-ci. Les peignes 166 sont disposés symétriquement l'un de l'autre par rapport au plan ML, entre les parois 162c, 162d et les parois 148b, 148c, 148d. Chaque peigne 166 s'étend depuis le voisinage du coin correspondant du boîtier 16 en direction de chaque tambour 156, 158. En l'espèce et comme représenté en détail à la figure 14, chaque peigne 166 comprend quatre creux 168a1-4 alternant avec trois dents 168b2-4, et deux extrémités 168b1 et 168b5 du peigne. Le contre-peigne 168 est monté mobile en rotation autour d'un arbre 170 reçu dans un logement 172 ménagé dans l'extrémité 168b5. Le contre-peigne 168 est verrouillé dans une position d'obturation des creux 168a1-4 grâce à des moyens de verrouillage élastiques classiques 174 formant clip ménagés dans l'extrémité 168b1 et sur le contre peigne 168 à l'opposé de l'axe 170.

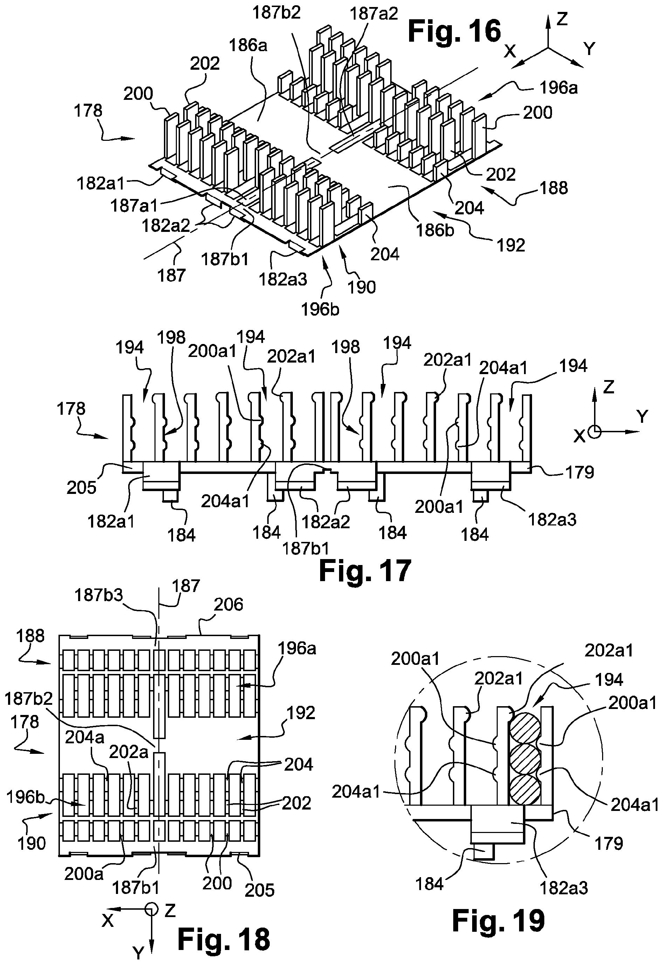

La zone 152 de la cassette 88 comprend un logement 176 pour un support d'épissure 178 rapporté à la cassette de façon amovible. Ce logement 176 a une forme rectangulaire correspondant à la forme générale d'une embase 179 du support d'épissure 178. Comme représenté aux figures 8 et 13, la zone 152 comprend des orifices 180 disposés en trois lignes parallèles à la direction Y lorsque la cassette 88 est dans la position fermée. Deux lignes 180a, 180b sont disposées de part et d'autre du plan ML. Chaque ligne 180a, 180b comprend respectivement trois orifices 180a1-3, 180b1-3 permettant de loger des clips 182a1-3, 182b1-3 du support d'épissure 178, visibles sur la figure 17. Une ligne 180c permet également de loger des plots de centrage 184 du support 178.

Comme représenté sur les figures 16 à 19, le support d'épissure 178 comprend deux parties 186a et 186b pouvant être séparées l'une de l'autre suivant une ligne prédéterminée 187. Les deux parties 186a, 186b sont symétriques par rapport à la ligne prédéterminée 187. En l'espèce le support est sécable grâce à, d'une part, deux évidements 187a1, 187a2 et, d'autre part, trois zones de striction 187b1, 187b2, 187b3 alternant avec les évidements 187a1, 187a2. Les évidemment et les zones de striction matérialisent la ligne prédéterminée 187. Le support d'épissures 178 comprend deux zones de maintien 188, 190 des fibres optiques de part et d'autre d'une zone d'épissure 192. Chacune de ces zones 188, 190 intercepte en son milieu la ligne 187.

Chaque zone de maintien 188, 190 comprend respectivement des moyens de maintien 196a, 196b d'une fibre optique comprenant plusieurs couples de plots. Les couples de plots délimitent plusieurs canaux 194 débouchant sur la zone d'épissure 192. En l'espèce et comme représenté sur les figures 16 et 18, chaque canal 194 est délimité par des premier, deuxième et troisième couples de plots, respectivement référencés 200, 202 et 204 de chaque côté de la zone d'épissure 192 et alignés suivant la direction X en partant des bords 205, 206 de l'embase 179 parallèles à la direction Y vers la zone de d'épissure 192.

Le support 178 comprend également des moyens de blocage 198 des fibres optiques dans les moyens de maintien 196a, 196b. Ces moyens de blocage 198 appartiennent aux moyens de maintien 196a, 196b et sont aptes à bloquer plusieurs fibres indépendamment les unes des autres dans les moyens de maintien communs 196a, 196b auxdites fibres. En l'espèce, les moyens de blocage comprennent des reliefs portés par au moins un des plots de chaque couple. Ainsi, un premier plot 200a de maintien du premier couple 200 comporte un relief 200a1 positionné à environ deux tiers de la hauteur du plot 200a par rapport à l'embase 179 et pointant vers l'intérieur du canal. Un deuxième plot 202a de maintien du deuxième couple 202 associé au même canal 194, comporte un relief 202a1, positionné au sommet du plot 202a, ce deuxième plot de maintien 202a étant disposé d'un côté du canal 194 opposé à celui du premier plot 200a. Le relief 202a1 pointe également vers l'intérieur du canal 194. Un troisième plot 204a de maintien du troisième couple 204 comporte un relief 204a1 de blocage. Le relief 204a1 de maintien est disposé du même côté du canal 194 que celui du premier plot 200a. Le plot 204 présente une hauteur égale à environ un tiers de la hauteur des plots 200a et 202a. Le relief 204a1 est disposé au sommet du plot 204 et pointe vers l'intérieur du canal 194. On remarquera que selon que les plots sont disposés sur la partie 186a ou 186b du support 178, les reliefs ne sont pas orientés de la même façon. En effet, sur la partie 186a désignée comme étant la plus proche de la paroi 153, illustrée sur les figures 13 et 15, les reliefs 200a1, 204a1 pointent vers la paroi 153alors que les reliefs 202a1 pointent en direction opposée à la paroi 153. Sur la partie 186b désignée comme étant la plus éloignée de la paroi 153 sur la figure 15, les reliefs 200a1, 204a1 pointent en direction opposée à la paroi 153 alors que les reliefs 202a1 pointent vers la paroi 153. On remarquera également que les canaux adjacents aux bords du support 178 comprennent un nombre réduit de plots. En l'espèce ces canaux adjacents ne sont délimités que par deux couples de plots.

On remarquera que d'une manière générale chaque canal de guidage 194 comporte au moins deux reliefs de maintien de chaque fibre FO. Les reliefs diffèrent l'un de l'autre deux à deux, par les paramètres suivants : leur hauteur par rapport à l'embase du support, le côté du canal où ils se situent, et le couple de plots qui les portent. Ces plots et reliefs permettent de maintenir jusqu'à trois fibres FO dans le même canal, indépendamment les une des autres au-dessus les unes des autres et parallèlement les unes aux autres, comme cela est représenté sur la figure 19. On notera, de plus, que le support 178 est destiné à recevoir des épissures dites par fusion.

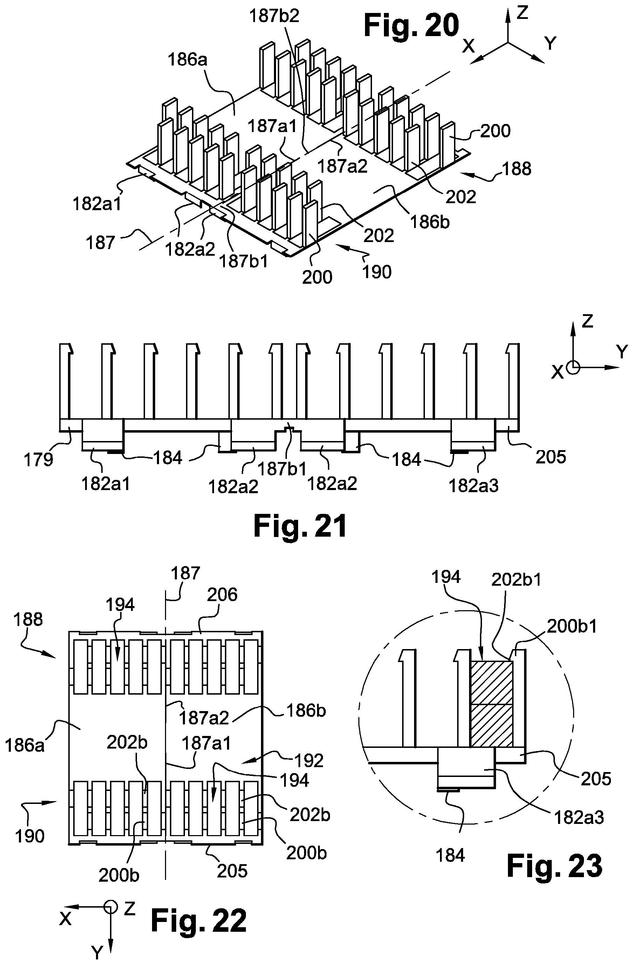

En variante et comme représenté sur les figures 20 à 23, le support 178 peut recevoir des épissures mécaniques. Dans ce cas, chaque canal 194 est délimité par des premier et deuxième couples de plots, respectivement référencés 200, 202 alignés suivant la direction X en partant des bords 205, 206 de l'embase 179 vers la zone de d'épissure 192. Un premier plot 200b de maintien du premier couple 200 comporte un relief 200b1 positionné au sommet du plot 200b et pointant vers l'intérieur du canal 194. Un deuxième plot 202b de maintien du deuxième couple 202 associé au même canal 194, comporte un relief 202b1, positionné au sommet du plot 202b, ce deuxième plot de maintien 202a étant disposé d'un même côté du canal 194 que celui du premier plot 200b. Le relief 202b1 pointe également vers l'intérieur du canal 194. Les plots 200b et 202b présentent tous des hauteurs égales. On remarquera que les plots, qu'ils soient disposés sur la partie 186a ou 186b du support 178, présentent des reliefs tous orientés de la même façon, en l'espèce vers la paroi 153. Dans cette variante, les plots et reliefs permettent de maintenir jusqu'à deux fibres dans le même canal.

Les deux variantes de support peuvent être utilisées afin de raccorder différentes fibres optiques avec différents types d'épissures. En effet, chaque support étant sécable, il est possible de disposer côte à côte une partie résultant de la séparation d'avec l'autre partie du support conforme aux figures 16 à 19 suivant la ligne prédéterminée et une autre partie résultant de la séparation d'avec l'autre partie du support conforme aux figure 20 à 23 suivant la ligne prédéterminée. Chacune de ces parties peut alors recevoir respectivement des épissures dites par fusion et mécaniques.

Ainsi, on notera que d'une manière générale, le boîtier pourra comprendre, au moins une partie d'un support et/ou un support.

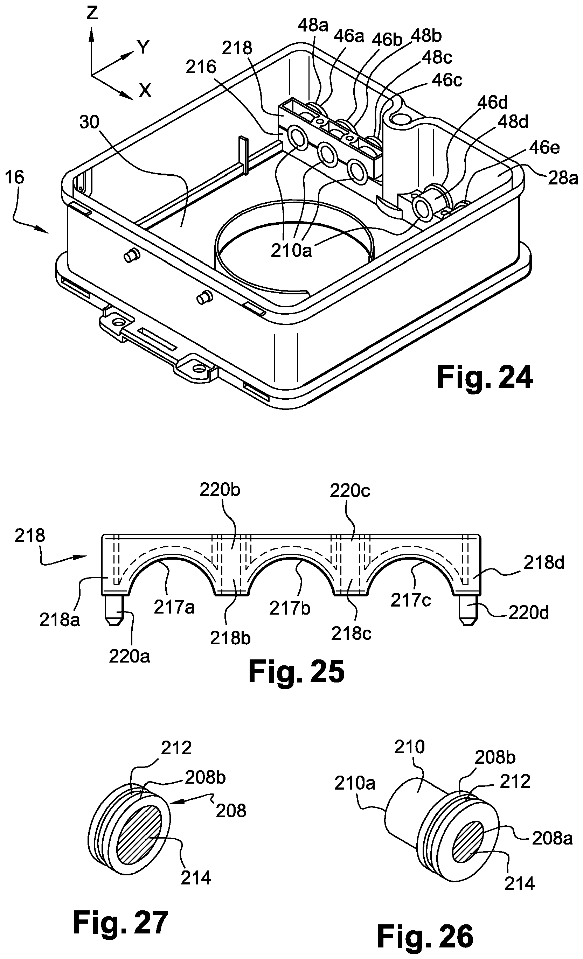

On a représenté sur la figure 24 le boîtier 16 dans lequel chaque orifice 46a, 46b, 46c, 46d d'entrée et/ou de sortie pour le passage d'un câble à fibres optiques est muni de son organe d'étanchéité correspondant 48a-d conforme à la figure 26. Sur cette figure 26, chaque organe 48a-d est à symétrie de révolution et comprend une partie large 208 prolongée par une partie étroite 210 de forme générale cylindrique et de rayon externe plus faible. Les organes sont creux. Leur rayon interne est constant sur toute leur longueur de sorte que le câble passant par chaque organe d'étanchéité 48a-d épouse leur parois internes 208a, 210a respectivement. La surface externe 208b du corps 210 présente une rainure 212 permettant de positionner chaque organe d'étanchéité dans l'orifice 46a-d correspondant. Ainsi, lors du passage du câble à fibre optique, ce dernier élargit l'organe d'étanchéité de sorte que la rainure 212 est plaquée contre l'orifice 46a-d correspondant. En outre, chaque organe 48a-d comprend un film d'étanchéité 214 s'étendant dans un espace de passage du câble dans l'organe, délimité par la paroi interne 208a de la partie 208 à partir de cette paroi 208a. De préférence, le film 214 est prédécoupé. En variante et comme cela est représenté sur la figure 27, l'organe d'étanchéité pourra ne comporter qu'un corps 208. Dans une autre variante et comme représenté à la figure 2, l'organe d'étanchéité 48a, 48b, 48c, 48d comprend un prolongement partiel 215 s'étendant en sens opposé au prolongement 210. Ce prolongement 215 permet de supporter le câble avant son passage dans l'organe.

Sur la figure 24, le prolongement 210 est enserré entre deux parties 216 et 218 de fixation du câble. Dans le cas où l'organe d'étanchéité 48a-d est conforme à la variante décrite en référence à la figure 27, le câble est directement enserré au contact des parties 216 et 218. La partie 216 est d'une seule pièce avec le boîtier 16 alors que la partie 218 est rapportée sur le boîtier 16. Comme représenté sur les figures 24 et 25, la partie rapportée 218 a une forme générale de pont comportant trois arches 217a-c séparées entre elles par des piliers 218a-d. La partie 218 comprend, entre les arches des paires d'arches 217a, 217b et 217b, 217c, un orifice 220b, 220c de forme générale cylindrique ménagée dans chaque pilier 218b et 218c. Les piliers d'extrémité 218a et 218d sont prolongés par des plots 220a et 220d. La partie 216 présente une forme complémentaire de la partie 218, à savoir une forme générale de pont comportant trois arches séparées entre elles par des piliers. La partie 216 comprend, entre les arches des deux paires d'arches, un plot de forme générale cylindrique prolongeant chaque pilier et destiné à pénétrer dans l'orifice 220b, 220c correspondant de la partie 218. Les piliers situés aux extrémités du pont présentent des orifices destinés à recevoir les plots 220a et 220d de la partie 218.

Les boîtiers 16, 18 selon le premier mode de réalisation de l'invention permettent de mettre en oeuvre un procédé d'installation dont on va décrire les principaux aspects liés à l'invention.

Lors de l'installation de l'ensemble 14 dans l'immeuble 10, on fixe le premier boîtier 16 ou boîtier inférieur sur un support, par exemple une paroi de l'immeuble au moyen de vis que l'on fait passer dans les orifices 52a, 52b1 et 52b2. Puis, on fait passer le câble d'adduction 13 dans l'orifice 46a muni de l'organe d'étanchéité 48a.

Dans le cas où le câble d'adduction est trop gros, on le divise en deux parties pouvant passer, par exemple, dans les orifices 46a et 46b, muni chacun d'organes 48a et 48b. Toutefois, en supposant ici que le câble 13 comprend un nombre de fibres optiques FO trop important pour que le raccordement soit effectué dans le seul boîtier 16, on divise cette fois dans le boîtier ces fibres optiques FO en deux faisceaux. Le premier faisceau est enroulé dans l'emplacement E1, passé au travers des ouvertures 140 correspondant aux cassettes 88, 90 du boîtier 16, puis lové sur les cassettes 88, 90. Le deuxième faisceau est associé au deuxième boîtier comme indiqué plus bas.

Puis, le deuxième boîtier 18 est installé sur le premier. Avant ou après cette étape, on repère le câble d'immeuble et on fait passer ses fibres FO par les orifices avant 46a et 46b du boîtier 18, muni chacun d'organes 48a, et 48b.

Puis on positionne l'ensemble 14 dans la position ouverte comme illustré aux figures 9 et 10. Le verrou 134 permet d'immobiliser les boîtiers 16 et 18 dans cette position.

On libère alors l'orifice 130 du fond du deuxième boîtier en retirant l'opercule 133 et on fait passer un premier faisceau de fibres FO du câble d'immeuble 15 par cet orifice 130 depuis le deuxième boîtier jusqu'au premier boîtier.

Le premier faisceau comprenant des fibres devant être raccordées par des épissures dites mécaniques et par fusion, on sépare, d'une part, l'une de l'autre, deux parties 186a et 186b du support 178 conforme aux figures 16 à 19 et, d'autre part, l'une de l'autre, deux parties 186a et 186b du support 178 conforme aux figures 20 à 23. Puis, on associe deux parties 186a des deux supports sur chacune des casettes 88 et 90.

Ensuite, on raccorde le premier faisceau du câble d'immeuble 15 au premier faisceau du câble d'adduction 13, fibre à fibre, sur les supports d'épissures 178 associés des cassettes 88, 90 du boîtier inférieur 16. En variante, on pourrait raccorder toutes les fibres devant être raccordées par des épissures dites mécaniques sur la cassette 88 et toutes les fibres devant être raccordées par des épissures dites par fusion sur la cassette 90, sous réserve d'adapter les supports à un tel usage.

On enroule le deuxième faisceau du câble d'adduction 13 dans l'emplacement E2 du boîtier inférieur 16. Ainsi, les spires des fibres du premier faisceau du câble 13 destinées à être raccordées dans le boîtier inférieur 16 sont reçues dans l'emplacement inférieur E1 alors que les spires des fibres du second faisceau du câble 13 destinées à être raccordées dans le boîtier supérieur 18 sont reçues dans l'emplacement supérieur E2. On a ainsi pris soin de disposer des spires appartenant à des fibres distinctes dans les emplacements respectifs de la chambre 116.

Puis on fait passer le deuxième faisceau au travers de l'ouverture 140 de ce boîtier, à travers l'orifice 130 du fond du boîtier supérieur, puis à travers l'ouverture 140 de ce boîtier. Enfin, on raccorde les fibres FO du deuxième faisceau du câble d'adduction 13 aux fibres FO du deuxième faisceau du câble d'immeuble 15, fibre à fibre, dans ce deuxième boîtier, sur les cassettes 88, 90 de façon analogue au raccordement entre le premier faisceau du câble d'immeuble 15 et le premier faisceau du câble d'adduction 13.

On retire alors le verrou 134 pour positionner l'ensemble en position fermée. Pour ce faire, on obture l'ouverture 34 du boîtier inférieur 16 avec le fond 30 du boîtier supérieur 18. Puis, on obture l'ouverture 34 du boîtier supérieur 18 avec le couvercle 38.

Les boîtiers 16, 18 selon le premier mode de réalisation de l'invention permettent aussi de mettre en oeuvre un procédé de maintenance dont on va décrire les principales particularités liées à l'invention.

Un installateur retire le couvercle 38 et effectue des opérations de maintenance dans le boîtier supérieur 18, au besoin en soulevant la cassette. Une fois celles-ci effectuées, il déplace le boîtier supérieur 18 par rapport au boîtier inférieur 16 grâce aux moyens d'articulation 54, faisant ainsi passer l'ensemble 14 de sa position fermée à sa position ouverte. En déplaçant le boîtier supérieur 18 par rapport au boîtier inférieur 16, on fait varier le rayon de courbure des spires des fibres optiques reçues dans l'emplacement E2. L'installateur effectue alors les opérations de maintenance dans le boîtier inférieur 16, au besoin en soulevant la ou les cassettes. En soulevant une ou plusieurs cassettes, on fait varier le rayon de courbure des spires de fibres optiques reçues dans l'emplacement E1.

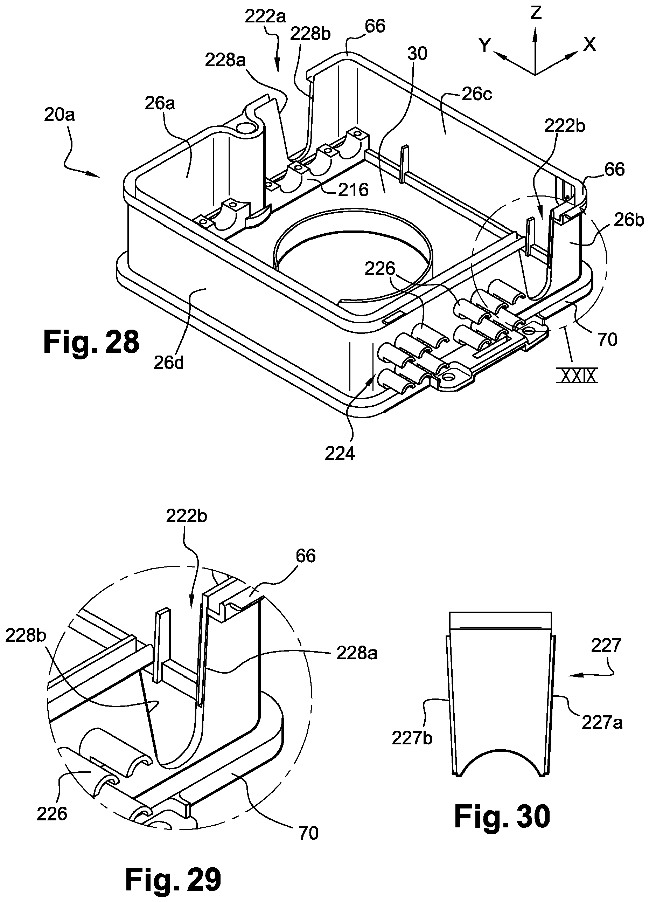

On a représenté sur les figures 28 et 29, le boîtier 20a selon le second mode de réalisation de l'invention. Ce boîtier est identique aux boîtiers 20b-d. Sur les figures 28, 29, les éléments analogues à ceux représentés sur les figures précédentes sont désignés par des références identiques.

A la différence du boîtier 16, le boîtier 20a comprend sur chacune des parois avant 28a et arrière 28b, une ouverture 222a et 222b d'entrée et de sortie de câble. En outre, ces ouvertures présentent une forme générale de « U » débouchant au bord supérieur 66. L'ouverture avant 222a est située en regard d'une arche de la partie 216 de façon qu'un câble passant par l'ouverture 222a puisse être enserrée entre les parties 216 et 218. La paroi arrière 28b comportent également des orifices 224 de sorties d'un câble à fibre optique munie d'organes d'étanchéité 226 analogue aux organes d'étanchéité représentés à la figure 2. Afin d'obturer chaque ouverture 222a, 222b, un coulisseau 227 représenté à la figure 30, présente une forme complémentaire de celle de l'orifice muni du câble 15. Ce coulisseau présente deux bords 227a et 227b aptes à coulisser dans des glissières complémentaires 228a, 228b ménagées dans chaque paroi 28a et 28b.

Dans ce mode de réalisation et comme représenté à la figure 1, le boîtier 20a permet de faire traverser le câble 15 à fibres optiques dans le boîtier 20a en dérivant du câble 15 certaines de ses fibres optiques FO vers les habitations 10a1, 10a2. Ces fibres FO peuvent, le cas échéant, former des spires dans les emplacements E1, E2 du support 126, puis passent dans les orifices 224. Le reste du câble est ensuite dirigé vers le palier suivant. Le câble 15 peut également pénétrer dans le boîtier par l'ouverture 222a sans ressortir par l'ouverture 222b, comme représenté au niveau du palier 11 d sur la figure 1.

Le boîtier 20a selon le deuxième mode de réalisation de l'invention permet de mettre en oeuvre un procédé d'installation dont on va décrire les principaux aspects liés à l'invention.

A l'arrivée sur le premier palier, le câble d'immeuble 15 comprend au moins 8 fibres optiques destinées aux habitations 10a1, 10a2, 10b1, 10b2, 10c1, 10c2, 10d1, 10d2. On fixe le boîtier 20a sur un support. On retire le coulisseau 227 de chacune des parois 28a, 28b du boîtier 20a. On fait passer le câble d'immeuble 15 dans l'ouverture 222a. On replace le coulisseau correspondant. Dans le boîtier, on dérive du câble 15 les deux fibres FO destinées aux habitations 10a1 et 10a2. Puis, on forme les spires correspondantes à ces fibres dans les emplacements du support 126. On fait sortir ces fibres FO par deux orifices 224 munis chacun de l'organe d'étanchéité 226. On fait sortir du boîtier le câble 15 avec les fibres qui lui restent par l'orifice 222b et on replace le coulisseau correspondant.

L'invention ne se limite pas aux modes de réalisation précédemment décrits.

En effet, le boîtier pourra présenter des tailles variées. A titre d'exemple d'ordre de grandeur, les dimensions du boîtier pourront prendre des valeurs allant du décimètre au mètre.

De plus, le boîtier selon l'invention pourra présenter une forme générale cylindrique, ovoïde ou autre sans pour cela sortir du cadre de l'invention.

On pourra par ailleurs exploiter un boîtier de raccordement pour fibres optiques délimité par des parois externes et comprenant :
- au moins une cassette de raccordement montée mobile par rapport aux parois externes, et
- un support relié directement à l'une des parois externes et apte à servir d'appui à des spires de fibre optique.

On pourra aussi exploiter un boîtier de raccordement pour fibres optiques délimité par des parois et comprenant :
- au moins une cassette de raccordement montée mobile par rapport aux parois, et
- un support apte à servir d'appui à des spires de fibre optique et agencé hors de la cassette de raccordement.

On pourra également exploiter un boîtier de raccordement pour fibres optiques comprenant une partie rapportée de façon amovible, cette partie étant apte à servir d'appui à des spires de fibre optique, cette partie comprenant des organes de délimitation d'un emplacement apte à recevoir des spires de fibre optique. Ces boîtiers ne comprendront pas nécessairement des emplacements distincts aptes à recevoir des spires de fibre optique de sorte qu'elles s'étendent dans des plans différents l'un de l'autre, ni nécessairement un support apte à servir d'appui commun aux spires de chaque emplacement.

En outre, on notera que les caractéristiques :
- de l'ensemble de deux boîtiers 14,
- de l'entretoise 120,
- de la cassette 88,
- de l'organe d'étanchéité 48a-d, et
- des parties 216, 218
décrites ci-dessus peuvent être mises en oeuvres indépendamment les unes des autres et indépendamment du fait que le boîtier présente une chambre délimitée par deux parois principales du boîtier en regard l'une de l'autre, la chambre présentant au moins deux emplacements distincts aptes à recevoir des spires de fibre optique de sorte qu'elles s'étendent dans des plans différents l'un de l'autre, le boîtier comprenant un support apte à servir d'appui commun aux spires de chaque emplacement.

## Revendications

1. Boîtier (16, 18) de raccordement pour fibres optiques, comprenant :
- une chambre (116) délimitée entre deux parois principales (30, 88) du boîtier en regard l'une de l'autre, la chambre présentant au moins deux emplacements (E1, E2) distincts se succédant le long d'un axe principal (S) du support, aptes à recevoir des spires de fibre optique de sorte qu'elles s'étendent dans des plans différents l'un de l'autre ; et
- un support (126) apte à servir d'appui commun aux spires de chaque emplacement, avec une première partie formant embase (118), d'une seule pièce avec un fond (30) du boîtier et une deuxième partie formant entretoise (120), apte à être rapportée de façon amovible sur la première partie,
ce support comprenant un corps cylindrique (121) apte à définir un rayon de courbure minimal d'au moins une spire de fibre optique,
boîtier dans lequel :
- lesdits emplacements (E1, E2) sont délimités axialement par des organes respectifs en forme de pattes (122a-c ; 124a-c) portées par ladite deuxième partie formant entretoise (120), ces pattes s'étendant radialement par référence audit axe principal (S) du support et comprenant :
· des premières pattes (122 a-c) délimitant un premier desdits emplacements (E1) entre le fond (30) du boîtier et les premières pattes (122 a-c), et
· des secondes pattes (124a-c) délimitant un second desdits emplacements (E2) entre les premières pattes (122 a-c) et les secondes pattes (124a-c),
- les premières pattes (122 a-c) portent en outre des organes d'appui radial en forme d'ergots (123a-c) qui s'étendent axialement par référence audit axe principal du support, et les organes d'appui radial en forme d'ergots (123a-c) définissant un rayon de courbure maximal pour le second emplacement (E2),
boitier **caractérisé en ce qu'**au moins deux des pattes (122a-c) présentent des dimensions radiales maximales différentes entre elles, et les parois latérales (28a-d) du boîtier définissent un rayon de courbure maximal pour le premier emplacement (E1).

2. Boîtier selon la revendication 1, dans lequel les pattes (122a-c) sont réparties de façon uniforme autour de l'axe (S).

3. Boîtier selon la revendication 1, dans lequel les premières pattes (122a-c) sont décalées angulairement autour de l'axe principal par rapport aux secondes pattes (124a-c).

4. Boîtier (16, 18) selon la revendication 1, dans lequel la chambre (116) est délimitée entre le fond (30) du boîtier et une cassette (88) du boîtier montée mobile par rapport au fond (30).

## Patentansprüche

1. Anschlussgehäuse (16, 18) für Lichtleiter, umfassend:
- eine Kammer (116), die zwischen zwei einander gegenüber liegenden Hauptwänden (30, 88) des Gehäuses begrenzt wird, wobei die Kammer mindestens zwei verschiedene Steckplätze (El, E2) aufweist, die entlang einer Hauptachse (S) des Trägers aufeinander folgen und für die Aufnahme der Lichtleiterwindungen so eingerichtet sind, dass sie in Ebenen verlaufen, die sich voneinander unterscheiden; und
- einen Träger (126), der dazu eingerichtet ist, als den Windungen jedes Steckplatzes gemeinsame Abstützung zu dienen, mit einem ersten Teil, der einen Sockel (118) bildet, einstückig mit einem Boden (30) des Gehäuses, und einem zweiten Teil, der ein Abstandsstück (120) bildet und dazu eingerichtet ist, lösbar an dem ersten Teil angebracht zu werden,
wobei dieser Träger einen zylindrischen Körper (121) umfasst, der dazu eingerichtet ist, einen minimalen Krümmungsradius einer Lichtleiterwindung zu definieren,
wobei in dem Gehäuse:
- die Steckplätze (El, E2) durch jeweilige Organe in Form von Klauen (122a-c; 124a-c) axial begrenzt werden, die durch den zweiten das Abstandsstück (120) bildenden Teil getragen werden, wobei diese Klauen sich relativ zu der Hauptachse (S) des Trägers radial erstrecken und Folgendes umfassen:
• erste Klauen (122a-c), die einen ersten der Steckplätze (E1) zwischen dem Boden (30) des Gehäuses und den ersten Klauen (122a-c) begrenzen, und
• zweite Klauen (124a-c), die einen zweiten der Steckplätze (E2) zwischen den ersten Klauen (122a-c) und den zweiten Klauen (124a-c) begrenzen,
- die ersten Klauen (122a-c) ferner Organe zur radialen Abstützung in Form von Zapfen (123a-c) tragen, die sich relativ zu der Hauptachse (S) des Trägers axial erstrecken, und die Organe zur radialen Abstützung in Form von Zapfen (123a-c) einen maximalen Krümmungsradius für den zweiten Steckplatz (E2) definieren,
wobei das Gehäuse **dadurch gekennzeichnet ist, dass** mindestens zwei der Klauen (122a-c) maximale radiale Abmessungen aufweisen, die voneinander verschieden sind, und die Seitenwände (28a-d) des Gehäuses einen maximalen Krümmungsradius für den ersten Steckplatz (E1) definieren.

2. Gehäuse nach Anspruch 1, wobei die Klauen (122a-c) gleichmäßig um die Achse (S) verteilt sind.

3. Gehäuse nach Anspruch 1, wobei die ersten Klauen (122a-c) gegenüber den zweiten Klauen (124a-c) winklig um die Hauptachse versetzt sind.

4. Gehäuse (16, 18) nach Anspruch 1, wobei die Kammer (116) zwischen dem Boden (30) des Gehäuses und einer Kassette (88) des Gehäuses, die gegenüber dem Boden (30) beweglich gelagert ist, begrenzt wird.

## Claims

1. A connection box (16, 18) for optical fibres, comprising:
- a chamber (116) delimited between two opposite main walls (30, 88) of the box, the chamber having at least two distinct locations (E1, E2) following each other along a main axis (S) of the support, adapted to receive turns of optical fibre so that the latter extend in plans different from each other; and
- a support (126) adapted to serve as a common bearing for the turns of each location, with a first part forming a base (118), single piece with a bottom (30) of the box, and a second part forming a spacer (120), adapted to be removably added on the first part; said support comprising a cylindrical body (121) adapted to define a minimum radius of curvature of at least one turn of optical fibre,
box in which:
- said locations (E1, E2) are axially delimited by respective tab-shaped elements (122a-c; 124a-c) carried by said second part forming a spacer (120), these tabs extending radially with respect to said main axis (S) of the support and comprising:
• first tabs (122a-c) delimiting a first one of said locations (E1) between the bottom (30) of the box and the first tabs (122 a-c), and
• second tabs (124a-c) delimiting a second one of said locations (E2) between the first tabs (122 a-c) and the second tabs (124a-c),
- the first tabs (122a-c) moreover carry nib-shaped radial bearing elements (123a-c) that extend axially with respect to said main axis of the support, and the nib-shaped radial bearing elements (123a-c) defining a maximum radius of curvature for the second location (E2),
said box being **characterized in that** at least two of the tabs (122a-c) have maximum radial dimensions that are different from each other, and the lateral walls (28a-d) of the box define a maximum radius of curvature for the first location (E1).

2. The box according to claim 1, wherein the tabs (122a-c) are distributed uniformly about the axis (S).

3. The box according to claim 1, wherein the first tabs (122a-c) are angularly offset about the main axis with respect to the second tabs (124a-c).

4. The box (16, 18) according to claim 1, wherein the chamber (116) is delimited between the bottom (30) of the box and a cassette (88) of the box mounted mobile with respect to the bottom (30).
